# EUROPEAN PATENT APPLICATION

(11) **EP 2 251 687 A1**
(43) Date of publication of application: **17.11.2010**
(21) Application number: 09159892.0
(22) Date of filing: 11.05.2009
(51) Int. Cl.: G01N 31/22, G01J 1/42, G01N 21/78

(54) **Colorimetric anion sensor element**

(71) Applicant: The Provost Fellows And Scholars Of The College Of The Holy and Undivided Trinity Of Queen Elizabeth Near Dublin, Dublin 2 (IE)
(72) Inventor: Gunnlaugsson, Thorfinnur, Dublin 2 (IE); Veale, Emma, Dublin 2 (IE)
(74) Representative: Purdy, Hugh Barry

(57) **Abstract**

A sensor element suitable for colorimetric detection of anions in a sample, the sensor element comprising a water insoluble polymeric hydrogel having a polymer network defining a water permeable microvoid network, and an anion recognition dye (receptor) incorporated into the polymeric hydrogel. The anion recognition dye has a general formula (I), 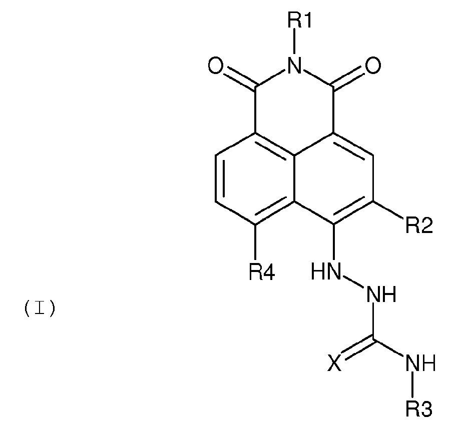 Wherein R1, R2, R3 and R4 are each, independently, selected from H or an optionally substituted group consisting of lower alkyl, allyl, aryl, thioureas, urea, amide, ether, and X is S or O. An anion detection probe comprising a support that incorporates the sensor element and provided in the form of a dip-stick is also disclosed.

## Description

The invention relates to a sensor element suitable for colorimetric detection of anions in a sample. In particular, the invention relates to a method for colorimetric detection of anion status in a sample.

Anions play a major structural and regulatory role in nature. Up to 80% of proteins and enzymes are anionic, while di- and tri-carboxylates are critical components of numerous metabolic processes. Anions are also important in erythrocyte cellular regulation, where mal-regulation of anion transport can have severe medical consequences, as is the case in Cystic Fibrosis. Hence, anions are clearly of enormous relevance to biology and their concentration changes can be used for medical diagnostics. Anions are also of industrial relevance and have implications in agriculture. This is of particular significance in Ireland, where phosphate/nitrate based fertilizers have been used extensively. This in turn has a detrimental impact on the local environment, as recently indicated in an Environmental Protection Agency report (EPA, 2001-EEP-DS9-M2). Phosphate is only moderately soluble and less mobile in soil although erosion can transport sediment-absorbed phosphate and polluted fresh water. This is the main cause of eutrophication in Irish fresh waters. Such contamination has an effect on wildlife in general, can encourage the growth of algal blooms and toxin-producing bacteria. Nitrate is also a major pollutant in Irish fresh waters, and eventually coastal waters. Nitrates are also used as preservatives in the food and in the beverage industry. Relatively low concentrations of nitrate are normally found in groundwater although spreading of artificial fertilizers, run-off from septic tanks and animal waste can greatly increase the level of nitrates. The EPA report, 'Water quality in Ireland 2005', states that nitrate levels are on the increase in Irish rivers and that ca.23% of groundwater locations across Ireland exceed the EU mean guide nitrate concentration for drinking water. It is therefore clear that monitoring of anions in biological and water samples is of utmost importance.

Intense efforts have been devoted to the problem of anion recognition whereby a number of research groups have designed receptors to coordinate anions. Although methods for detecting anions are known in the art, presently available analyzers use electrochemical sensors, some of which have a polymeric membrane containing an anion sensing substance therein to detect ions in solution. For example, US. Pat. No. 3,801,486 discloses a chloride-sensing electrode having a cellophane membrane. Japanese Laid-open Patent Application Specification No. 89688/79 discloses an anion-sensing electrode having a sensing membrane containing polyvinyl chloride (PVC) as a support substance, a quaternary ammonium salt as a sensing substance, and phenylalkylalcohol as a plasticizer. Another example, whereby an anion sensing electrode having a support membrane of polymeric material, a quarternary ammonium salt as sensing material, and a aliphatic alcohol having 8 to 16 carbon atoms as a plasticizer is disclosed in US. Pat. No. 4349436.

Such electrode measuring techniques often require a great deal of costly equipment and frequent maintance. Consequently, there currently exists a need for cost-effective and ease of use sensing materials which are easily prepared and exhibit selectivity towards specific anions in biological and aqueous samples. For example, Anzenbacher and co-workers have reported a method for the fabrication of simple colorimetric array-based assays utilizing pattern recognition for aqueous anion solutions (J. Am. Chem. Soc. 2007, 129, 7538). Many anion recognition motifs, such as ureas and thiourea receptors, have been developed and connected to chromophores to yield fluorescent or colorimetric anion sensors ( J. Fluoresc. 2005, 15, 287-299). In these sensors, anion detection is based upon the modulation of various photophysical properties of the chromophore such as colour, which betrays the anions presence. Sensitivity is detected by the magnitude of modulation and selectivity is achieved through receptor modification. Thiourea-based colorimetric sensors useful in the naked-eye detection of anions in aqueous media are described in Gunnlaugsson et al. (J. Org. Chem. 2005, 70, 10875).

### Statement of Invention

According to the invention, there is provided a sensor element suitable for colorimetric detection of anions in a sample, the sensor element comprising a water insoluble polymeric hydrogel having a polymer network defining a water permeable microvoid network, and an anion recognition dye incorporated into the polymeric hydrogel. Preferably, the anion recognition dye has a general formula (I), 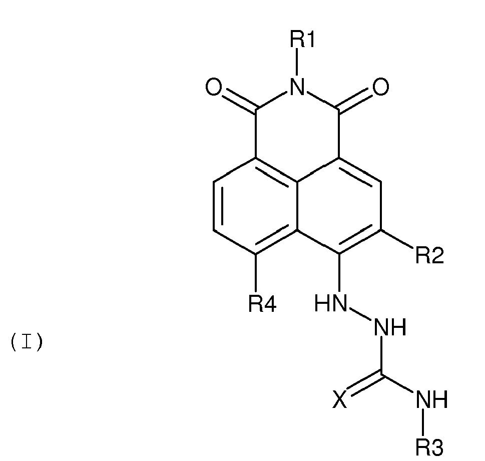 wherein:
- R1, R2, R3 and R4 are each, independently, selected from H or an optionally substituted group consisting of lower alkyl, allyl, aryl, thioureas, urea, amide, ether; and
X is S or O.

In one embodiment, R2 and R4 are each H. Suitably, R1 and R3 are each, independently, selected from the group consisting of lower alkyl, allyl, phenyl, thiourea, thioureas, amide, and ether. In one embodiment, R1 is a lower alkyl group such as an ethyl or methyl group. R3 is typically selected from a methyl group, a allyl group, and a optionally substituted phenyl group. Preferably, R2 is H. Ideally, X is S.

As used herein, the term "lower alkyl" should be taken to mean a C1 to C5 alkyl group, especially a methyl or ethyl group. An alkyl group is an optionally substituted straight, branched, or cyclic saturated hydrocarbon group. When substituted, alkyl groups may be substituted with any suitable group, including halo (such as F, Cl, Br, I), haloalkyl (such as CCl3 or CF3), alkoxy, alkylthio, hydroxyl, carboxy (-COOH), alkyloxycarbonyl (-C(O)R), alkylcarbonyloxy (OCOR), amino (-NH2), carbamoyl (-NHCOOR- or -OCONHR-), urea (-NHCONHR-) or thiol (-SH). As used herein, the term "allyl" refers to an alkene hydrocarbon group with the formula X-CH=CH-CH2-Y, wherein Y is selected from H or any other substituent including halo (such as F, Cl, Br, I), haloalkyl (such as CCl3 or CF3), alkoxy, alkylthio, hydroxyl, carboxy (-COOH), alkyloxycarbonyl (-C(O)R), alkylcarbonyloxy (OCOR), amino (-NH2), carbamoyl (-NHCOOR- or -OCONHR-), urea (-NHCONHR-) or thiol (-SH). X and Y are also a variety of these combinations.

As used herein, the term "aryl" refers to 5 and 6-membered single-ring aromatic groups that may include from zero to four heteroatoms, for example, phenyl, benzene, pyrrole, furan, thiophene, imidazole, oxazole, thiazole, tetrazole, pyrazole, pyridine, pyrazine and the like. Aryl groups also include polycyclic fused aromatic groups such as naphthyl or quinonyl and the like. The aromatic ring may be substituted at one or more ring positions with substituents such as halo (such as F, Cl, Br, I), haloalkyl (such as CCl3 or CF3), alkoxy, alkylthio, hydroxyl, carboxy (-COOH), alkyloxycarbonyl (-C(O)R), alkylcarbonyloxy (OCOR), amino (-NH2), amidino, imino, carbamoyl (-NHCOOR- or -OCONHR-), urea (-NHCONHR-) or thiol (-SH, including sulfhydryl, alkylthio, arylthio, thiocarboxylate, etc).

As used herein, the term "urea" refers to a group with the formula NH-CO-NH-R, wherein R is selected from groups containing H or any other substituent including halo (such as F, Cl, Br, I), haloalkyl (such as CCl3 or CF3), alkoxy, alkylthio, hydroxyl, carboxy (-COOH), alkyloxycarbonyl (-C(O)R), alkylcarbonyloxy (OCOR), amino (-NH2), carbamoyl (-NHCOOR- or -OCONHR-), or thiol (-SH). As used herein, the term "thiourea" refers to a group with the formula NH-CS-NH-R, wherein R is selected from H or any other substituent containing halo (such as F, Cl, Br, I), haloalkyl (such as CCl3 or CF3), alkoxy, alkylthio, hydroxyl, carboxy (-COOH), alkyloxycarbonyl (-C(O)R), alkylcarbonyloxy (OCOR), amino (-NH2), carbamoyl (-NHCOOR- or -OCONHR-), or thiol (-SH), or derivatives thereof.

As used herein, the term "amide" refers to a group with the formula NH-CO-R, wherein R is selected from H or any other substituent containing halo (such as F, Cl, Br, I), haloalkyl (such as CCl3 or CF3), alkoxy, alkylthio, hydroxyl, carboxy (-COOH), alkyloxycarbonyl (-C(O)R), alkylcarbonyloxy (OCOR), amino (-NH2), carbamoyl (-NHCOOR- or -OCONHR-), or thiol (-SH), or derivatives thereof.

As used herein, the term "ether" refers to a group with the formula O-R, wherein R is selected from H or any other substituent containing halo (such as F, Cl, Br, I), haloalkyl (such as CCl3 or CF3), alkoxy, alkylthio, hydroxyl, carboxy (-COOH), alkyloxycarbonyl (-C(O)R), alkylcarbonyloxy (OCOR), amino (-NH2), carbamoyl (-NHCOOR- or -OCONHR-), or thiol (-SH), or derivatives thereof.

As used herein, the term "hydrogel" should be taken to mean a water insoluble three-dimensional, hydrophilic, cross-linked polymeric network structure composed of hydrophilic homo- or hetero- copolymers, which has the ability to absorb significant amounts of water. Preferably, the water insoluble polymeric hydrogel comprises an acrylate polymer. Suitably, the water insoluble polymeric hydrogel comprises a homo-polymer of an acrylate monomer, or a hetero-copolymer of two different acrylate monomers. Suitably the acrylate monomer is selected form the group consisting of: hydroxyethyl methacrylate (HEMA); 2-methacrylic acid (MAA); methyl methacrylate (MMA); and 2-(diethylamino)ethyl methacrylate (DEAEMA). Other acrylate monomers suitable for use in the present invention will be apparent to those skilled in the art. In one preferred embodiment of the invention, the polymeric hydrogel is formed of a co-polymer of acrylate monomers in a ratio of from 15:1 to 1:15, especially from 10:1 to 1:10, and preferably from 9:1 to 1:9 (w/w).

In one embodiment, the acrylate co-polymer is selected from the group consisting of: HEMA and MMA; HEMA and MAA; HEMA and DEAEMA; MMA and MAA; MMA and DEAEMA; and MAA and DEAEMA.

In one embodiment of the invention, the anion recognition dye is entrapped within water permeable microvoid network of the hydrogel. When hydrated, the voids will comprise a certain amount of water depending on the polymer volume fraction after equilibrium swelling.

In another embodiment of the invention, the anion recognition dye is functionalised and forms part of the hydrogel polymeric network. Typically, the hydrogel is formed as a co-polymer of an acrylate monomer and an anion recognition dye which has been suitably functionalised to enable it co-polymerise with the acrylate monomer. Alternatively, or in addition, the anion recognition dye is functionalised to enable it to be cross-linked with the polymeric matrix.

In one preferred embodiment of the invention, the sensor element has an elongated form, such as, for example, a film, strip, tape, sheet or fibre. Typically, the sensor element has a thickness of between 0.1 and 1.0mm. In a particularly preferred embodiment, the sensor element is in the form of a film. Suitably, the sensor element is provided in the form of a tape or strip or film which optionally has adhesive on one side, ideally at a top or end of one side, facilitating attachment of the tape/strip/film to a suitable support.

The invention also relates to an anion detection probe comprising a support having a handle and a sensor element according to the invention spaced from the handle. In one embodiment, the detection probe has an elongated form, such as for example a dip-stick form, which facilitates the sensor element being inserted or immersed into a sample. Typically, the sensor element is a film or tape which is attached to the detection probe. Suitably, the sensor element is retro-fitted to the detection probe such that it may be removed after use and replaced with a fresh sensor element. In one embodiment, the detection probe includes a colorimetric reference guide suitable for correlating a colorimetric signal emitted by the sensor element with anion status. Thus, for example, the reference guide may comprise a series of shades of colour which correlates with qualitative or quantitative detection of anions. For example, the dye and polymer may be chosen such that it is suitable for detection of a specific anion, wherein shades on the reference guide correlates with different concentrations of the anion. Thus, the invention also relates to a co-polymer of an acrylate monomer (A) and an anion recognition dye of general formula (I), 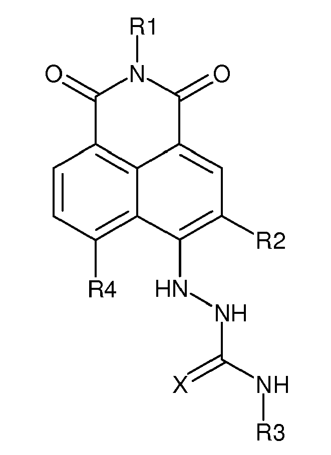 wherein:
- R2 and R4 are each, independently, selected from H or an optionally substituted group consisting of lower alkyl, allyl, aryl, urea, thioureas, amide, and ether;
- R1 and R3 are each, independently, allyl groups;
   and
- X is S or O.

The copolymer of the invention is obtainable by forming a solution of the acrylate monomer (or a solution of a mixture of acrylate monomers) which contains the anion recognitions dye, and then polymerising the solution.

In one embodiment of the invention, the anion recognition dye is a compound selected from compounds SR4 and SR5 that could consist of that shown in Table 1 below.

**Table 1**

| SR* | X | R1 | R3 | R2 | R4 |
|---|---|---|---|---|---|
| 1 | S | CH₂CH₃ | CH₃ | H | H |
| 2 | S | CH₂CH₃ | 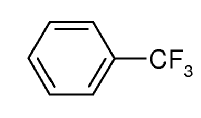 | H | H |
| 3 | S | CH₂CH₃ | 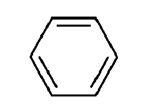 | H | H |
| 4 | S | CH₂CH₃ | 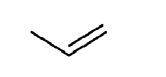 | H | H |
| 5 | S | CH₂CH₃ | 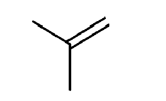 | H | H |

| | | | | | |
|---|---|---|---|---|---|
| *Synthetic Receptor | | | | | |

The invention also relates to a method for assessing the anion status of a sample comprising a step of providing a sensor element according to the invention that is capable of displaying a colorimetric signal in response to detection of anions, bringing the sensor element into contact with the sample for a suitable period of time, and then correlating the colorimetric signal with anion status. Due to the nature of these systems, the structures are also fluorescent, which additionally enables the potential use of these systems for the detection of ions in solution using fluorescent emission.

In the specification, the term "anion status" should be taken to mean both quantitative and qualitative detection of anions in a given sample. The "sample" will generally be a liquid sample, for example a sample of water from soil, a river, sea, effluent, rain, drinking water, and the like. However, the term should also be taken to include non-fluid samples such as, for example, soil, sand, foodstuff, and gaseous samples.

In one embodiment, the step of correlating the colorimetric signal with anion status comprises comparing the colour change of the sensor element with a reference colour guide. The colour guide may for example comprise a number of shades of the target colour, each of which correlates with a concentration of anion. Alternatively, the shades of colour forming part of the guide may correlate with specific anion species. In one embodiment, the reference colour guide is a visual reference wherein correlation of detected colorimetric change is manually correlated with the colour guide. Alternatively, the reference colour guide may be provided in an automated form, such as for example a spectrophotometer which is capable of correlating colorimetric or fluorescent change with anion status.

The invention also relates to a method of producing a colormetric anion sensor element of the type comprising an anion recognition dye incorporated into a water insoluble polymeric hydrogel, wherein the anion recognition dye has a general formula (I), 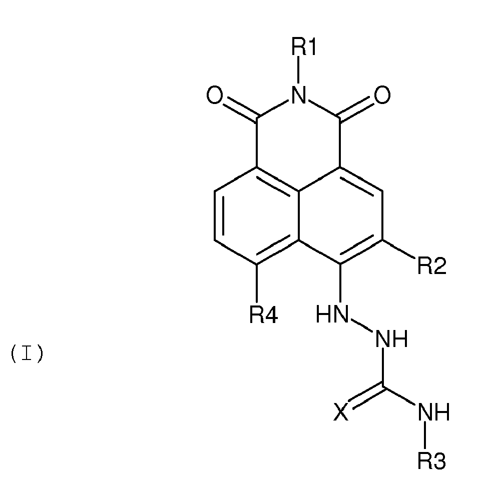 wherein:
- R1, R2, R3 and R4 are each, independently, selected from H or an optionally substituted group consisting of lower alkyl, allyl, phenyl, urea, thioureas, amide, and ether; and
- X is S or O.

The method suitably comprises the steps of providing a dehydrated water insoluble polymeric hydrogel, immersing the hydrated hydrogel into a solution of the anion recognition dye for a period of time sufficient to allow the dye molecules migrate into the microvoid network of the dehydrated hydrogel, and then dehydrating the hydrogel to entrap the dye molecules in the microvoid. Preferably, the process involves an initial step of dehydrating the hydrogel prior to the immersion step. Suitably, the hydrogel is dehydrated at elevated temperature, for example at 60°C for about 60 minutes. In one preferred embodiment, a number of immersion steps are carried out. Suitably, after the or each immersion step, the hydrogel is dehydrated prior to use. Typically, the solution of anion recognition dye has a concentration of 10⁻² to 10⁻⁶ M/L.

In another embodiment, the method comprises the steps of admixing the anion recognition dye into a solution of at least one monomer prior to polymerisation, and polymerising the solution of monomer(s) to provide the anion sensor element. Typically, the concentration of the anion recognition dye in the monomer solution is from 10⁻³ to 10⁻⁶ M/L. The polymerisation process preferably employs a cross-linker, suitably ethylene glycol dimethacrylate (EGDMA), ideally at about 1% (w/w), and typically a radical initiator such as benzoyl peroxide (BPO), suitably at about 0.4% (w/w). Other suitable cross-linker and radical initiators will be apparent to the skilled person. In a preferred embodiment of the invention, the formed sensor element is immersed in a suitable solvent (i.e. deionised water) to remove unreacted monomer prior to use.

### Brief Description of the Figures

Fig. 1A shows a generic synthetic protocol for producing an anion recognition dye. Fig. 1B shows a synthetic protocol for producing an anion recognition dye for use in the anion recognition dye for use in the anion sensor element of the invention.
Fig. 2 shows a number of acrylate momomers that may be employed to form a hydrogel part of the anion sensor element of the invention.
Fig. 3 The colour change for SR2 upon addition of an anion (in this case, acetate): (a) free host SR2; (b) SR2 + AcO⁻.
Fig_{.} 4 Chromogenic response of sensor SR2 (1 × 10⁻³ M) observable by the naked eye upon complexation with 10 equiv. of various anionic guests: (a) free host SR2; (b) SR2 + AcO⁻; (c) SR2 + H₂PO₄⁻; (d) SR2 + Br⁻; (e) SR2 + Cl⁻; (f) SR2 + F⁻
Fig. 5 Preparation of poly(HEMA) hydrogels
Fig. 6 The colour changes for SR2 in HEMA upon addition of an anion (in this case, acetate) (a) free host SR2; (b) SR2 + AcO⁻.
Fig. 7 Photographs of SR2 immobilised on poly(HEMA) hydrogels at concentrations of (a) 10⁻³ and (b) 10⁻² M.
Figure 8: The immobilisation of sensor SR2 (EBVA61) onto poly(HEMA) hydrogel (A-B) and the colour change of the sensor upon soaking in a acetate solution (C).

### Detailed Description of the Invention

### Materials and Methods.

### General.

Reactions were run under an atmosphere of argon unless otherwise stated. All chemicals were obtained from Sigma-Aldrich, and unless specified, were used without further purification. Deuterated solvents for NMR use were purchased from Apollo Ltd. Dry solvents were prepared using standard procedures, according to Vogel, with distillation prior to each use. Solvents for synthesis purposes were used at GPR grade unless otherwise stated. NMR spectra were recorded using a Bruker Advance III spectrometer, operating at 400 MHz and 600 MHz for ¹H-NMR and 100 MHz for ¹³C-NMR. NMR data were processed using Bruker Win-NMR 5.0 software. Electrospray mass spectra were recorded on a Mass Lynx NT V 3.4 on a Waters 600 controller connected to a 996 photodiode array detector with HPLC-grade methanol, water or acetonitrile as carrier solvents. Accurate molecular weights were determined by a peak-matching method, using leucine enkephaline (H-Tyr-Gly-Gly-Phe-Leu-OH) as the standard internal reference (m/z = 556.2771); all accurate mass were calculated to ≤ 5 ppm. Samples were prepared as solutions in MeOH, EtOH or CH₃CN. Melting points were determined using an Electrothermal IA9000 digital melting point apparatus. Infrared spectra were recorded on a Mattson Genesis II FTIR spectrometer equipped with a Gateway 2000 4DX2-66 workstation and on a Perkin Elmer Spectrum One FT-IR Spectrometer equipped with Universal ATR sampling accessory. Elemental analysis was carried out at the Microanalysis Laboratory, School of Chemistry and Chemical Biology, University College Dublin.

### A. Receptor Synthesis

### Synthesis of a Synthetic Receptor According to a Specific Example Embodiment of the Present Disclosure.

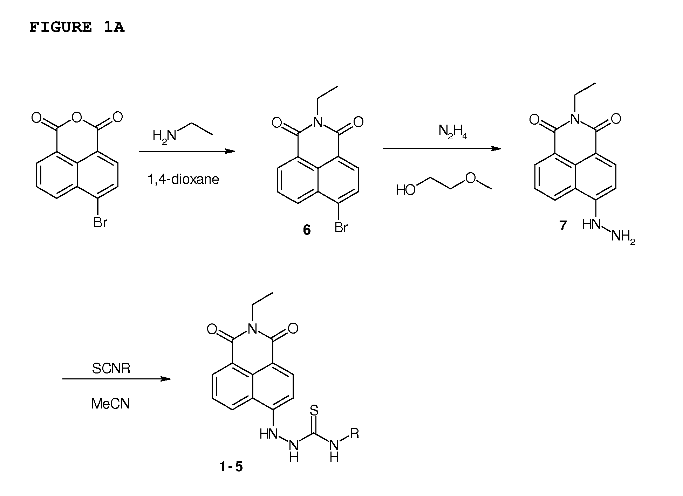

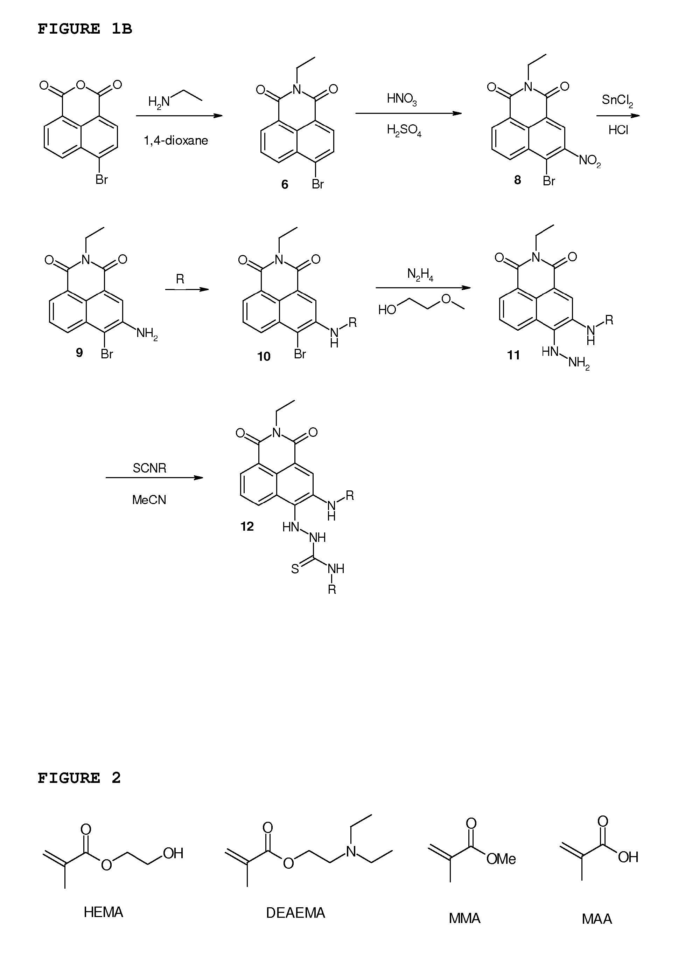

One example of the synthesis of an SR synthetic receptor is as follows and depicted in Figure 1A and Figure 1B. Bolded numbers in parenthesis refer to synthesis of intermediates in the synthetic scheme for SR as shown in Figure 1A and Figure 1B.

6-Bromo-2-ethylbenzo[de]isoquinoline-1,3-dione (Compound 6 in Figure 1A)
4-Bromo-1,8-naphthalic anhydride (5.00 g, 18.0 mmol) and ethylamine (70% soln in water) (1.5 mL, 23.5 mmol) were refluxed in 1,4-dioxane (100 mL) for 7 h. The solution was then poured into ice cold water to precipitate out a solid, which was collected by filtration, washed with water, and dried to yield 6 as a cream colored solid (4.206 g, 80%). mp 160-162 °C (lit. mp 163 °C); Anal. Calcd for C₁₄H₁₀BrNO₂: C 55.29, H 3.31, N 4.61. Found: C 55.22, H 3.32, N 4.73; δ_{H} (400 MHz, CDCl₃): 1.34 (3H, t, J = 7.0 Hz, CH₃), 4.24 (2H, q, J = 7.0 Hz, CH₂), 7.82 (1H, dd, J = 7.8 and 8.0 Hz, Ar-H), 8.00 (1H, d, J = 8.0 Hz, Ar-H), 8.38 (1H, d, J = 8.0 Hz, Ar-H), 8.51 (1H, d, J = 8.5 Hz, Ar-H), 8.62 (1H, d, J = 7.5 Hz, Ar-H); δ_{C} (400 MHz, CDCl₃): 12.8, 35.2, 121.9, 122.7, 127.5, 128.5, 129.6, 130.1, 130.5, 130.6, 131.4, 132.6, 162.8, 162.9.

2-Ethyl-6-hydrazinobenzo[de]isoquinoline-1,3-dione (Compound 7 in Figure 1A). Hydrazine monohydrate (16.8 mL) was added to 6 (4.20 g, 13.8 mmol) in methoxy ethanol (16.6 mL) and the reaction mixture was heated at 130 °C and left stirring for 1 h. The reaction mixture was cooled to room temperature and the precipitate was collected by suction filtration and then washed with ethanol to yield 7 as a yellow solid (0.14 g, 81%). mp 255-257 °C; HRMS: Calcd for C₁₄H₁₄N₃O₂ [M + H]⁺ 256.1086, found 256.1077; δ_{H} (400 MHz, (CD₃)₂SO): 1.18 (3H, t, J = 7.0 Hz, CH₃), 4.05 (2H, q, J = 7.0 Hz, CH₂), 4.69 (2H, d, J = 10.6 Hz, NH₂), 7.24 (1H, d, J = 8.6 Hz, Ar-H), 7.64 (1H, dd, J = 7.8 and 8.0 Hz, Ar-H) 8.28 (1H, d, J = 7.5 Hz, Ar-H), 8.41 (1H, d, J = 7.0 Hz, Ar-H), 8.61 (1H, d, J = 8.5 Hz, Ar-H), 9.13 (1H, br s, NH); δ_{C} (100 MHz, (CD₃)₂SO): 13.3, 34.2, 104.0, 107.4, 118.4, 121.7, 124.1, 127.3, 128.2, 130.5, 134.2, 153.2, 162.7, 163.6; m/z 256 (M + H)⁺; uₘₐₓ/cm⁻¹ 3450, 3366, 3316, 1672, 1636,1614, 1578, 1540, 1439, 1389, 1366, 1346, 1310, 1251, 114, 1069, 950, 772.

### General Synthesis of Synthetic Receptors SR1 - SR5.

The relevant isothiocyanate (1.2 → 2 equiv) was added to a suspension of the relevant 4-hydrazino 1,8-naphthalimide in dry MeCN and the resulting reaction mixture was stirred at reflux. Upon completion the reaction mixture was cooled to room temperature and the resulting precipitate was collected by suction filtration and washed with MeCN. Purification if necessary was carried out by recrystallisation with chloroform to remove un-reacted excess isothiocyanate.

6-[1-Amino-3-(methyl)-thiourea]-2-ethylbenzo[de]isoquinoline-1,3-dione (SR1) was synthesized according to the above procedure using 7 (0.3 g, 1.18 mmol, 1 eq) and methyl isothiocyanate (0.13 mL, 1.41 mmol, 1.5 eq), yielding the desired product as yellow solid (0.32 g, 84%).

6-[1-Amino-3-(4-trifluoromethylphenyl)-thiourea]-2-ethylbenzo[de]isoquinoline-1,3-dione (SR2) was synthesized according to the above procedure, using 7 (0.60 g, 2.35 mmol, 1 eq.) and 4-(trifluoromethyl)phenyl isothiocyanate (0.53 g, 2.58 mmol, 1.1 eq). The reaction mixture was filtered hot through celite and the filtrate was removed in vacuo to yield the desired product as a brown solid (1.0 g, 99%), after recrystallisation from CHCl₃. mp 177-179 °C; HRMS: Calcd for C₂₂H₁₈N₄O₂F₃S [M + H]⁺ 459.1103, found 459.1083; δ_{H} (400 MHz, (CD₃)₂SO): 1.20 (3H, t, J = 6.8 Hz, CH₃), 4.07 (2H, q, J = 6.8 Hz, CH₂), 6.99 (1H, d, J = 8.9 Hz, Ar-H naph), 7.67-7.74 (4H, C₆H₄), 7.83 (1H, dd, J = 8.9 and 9.6 Hz, Ar-H naph), 8.44 (1H, d, J = 8.2 Hz, Ar-H), 8.52 (1H, d, J = 7.5 Hz, Ar-H naph), 8.70 (1H, d, J = 7.5 Hz, Ar-H naph), 9.92 (1H, s, NH), 10.32 (1H, s, NH), 10.36 (1H, s, NH); δ_{C} (100 MHz, (CD₃)₂SO): 13.3, 34.5, 105.6, 111.8, 119.5, 121.9, 125.0, 125.6, 125.8, 126.3, 128.9, 129.3, 130.9, 133.6, 142.8, 149.7, 162.8, 181.3; m/z 459 (M + H)⁺; uₘₐₓ/cm⁻¹ 3483, 3254, 2980, 1686, 1647, 1616, 1586, 1535, 1387, 1325, 1245, 1165, 1116, 1066, 1017, 843, 776, 756. [J. Org. Chem. 2005, 70, 10875].

6-[1-Amino-3-(phenyl)-thiourea]-2-ethylbenzo[de]isoquinoline-1,3-dione (SR3) was synthesized according to the above procedure using 7 (0.3 g, 1.18 mmol, 1 eq) and phenyl isothiocyanate (0.17 mL, 1.41 mmol, 1.2 eq), yielding the desired product as yellow solid (0.33 g, 72%).

6-[1-Amino-3-(allyl)-thiourea]-2-ethylbenzo[de]isoquinoline-1,3-dione (SR4) was synthesized according to the above procedure using 7 (0.3 g, 1.18 mmol, 1 eq) and allyl isothiocyanate (0.13 mL, 1.29 mmol, 1.1 eq), yielding the desired product as yellow solid (0.22 g, 54%).

6-[1-Amino-3-(methallyl)-thiourea]-2-ethylbenzo[de]isoquinoline-1,3-dione (SR5) was synthesized according to the above procedure using 7 (0.25 g, 0.96 mmol, 1 eq) and methallyl isothiocyanate (0.22 mL, 1.92 mmol, 2 eq), yielding the desired product as yellow solid (0.23 g, 64%).

### B. Hydrogel and Sensor Synthesis

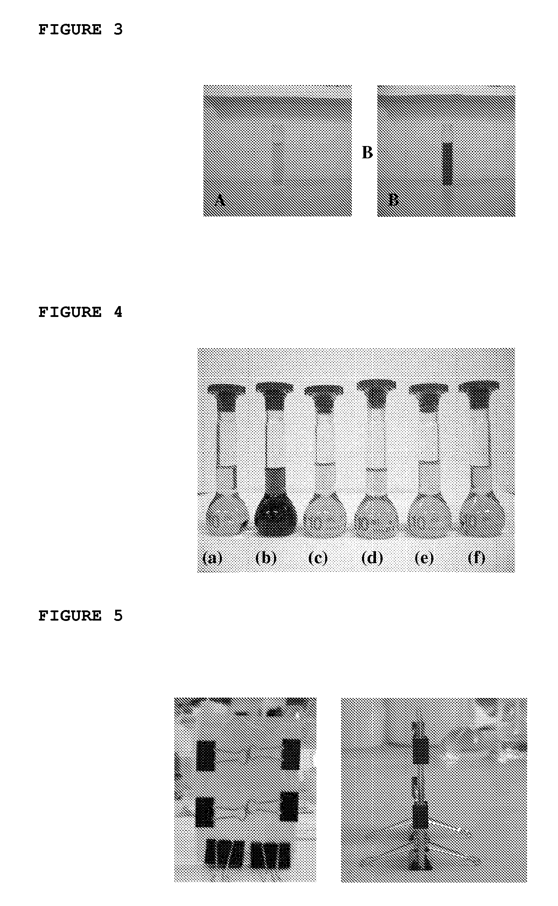

B.1 Synthetic receptor-containing hydrogels are prepared following the radical polymerisation of the monomer mixtures. Copolymers composed of a variety of compositions of hydroxyethyl methacrylate (HEMA), 2-methacrylic acid (MAA), methyl methacrylate (MMA) and 2-(diethylamino)ethyl methacrylate (DEAEMA), the structures of which are shown in Figure 2, were prepared by free radical polymerisation in the presence of cross-linkers. For instance, blank hydrogel matrixes of 10g total polymer mass can be prepared using methyl methacrylate (MMA) and 2-hydroxyethyl methacrylate (HEMA) in different ratios, such as: 9:1 (HEMA:MMA, w/w) and 100% HEMA. For the preparation of all hydrogels, monomers were stirred with a cross-linker ethylene glycol dimethacrylate (EGDMA) (1% w/w) and benzoyl peroxide (BPO) (0.4% w/w) as a radical initiator until dissolved. The monomer mixture was injected into a mould, made using a spacer between two sides of silicone release liner held together between two glass plates and then heated at 90 °C for 2 h or at 60 °C for 12 h (Figure 5). This procedure generated flat sheets whose thickness ranged between 0.1mm and 1mm, whereby the plate spacing controlled the thickness. On removal from the moulds, the films were immersed in deionised water for 14 days to remove any unreacted monomer before use. The synthetic receptors can be nonconvalently incorporated into different hydrogel matrixes (composed of a variety of compositions of HEMA, MAA, MMA and DEAEMA) by dehydrating films of hydrogel at 60 °C for 1 h and then immersing the blank dehydrated film samples at different time intervals into aqueous synthetic receptor solutions at various concentrations (10⁻³ - 10⁻⁶ M/L). Fine control of the loading can be achieved by repeating the immersion process. The films are then dehydrated at 60 °C for 1 h.

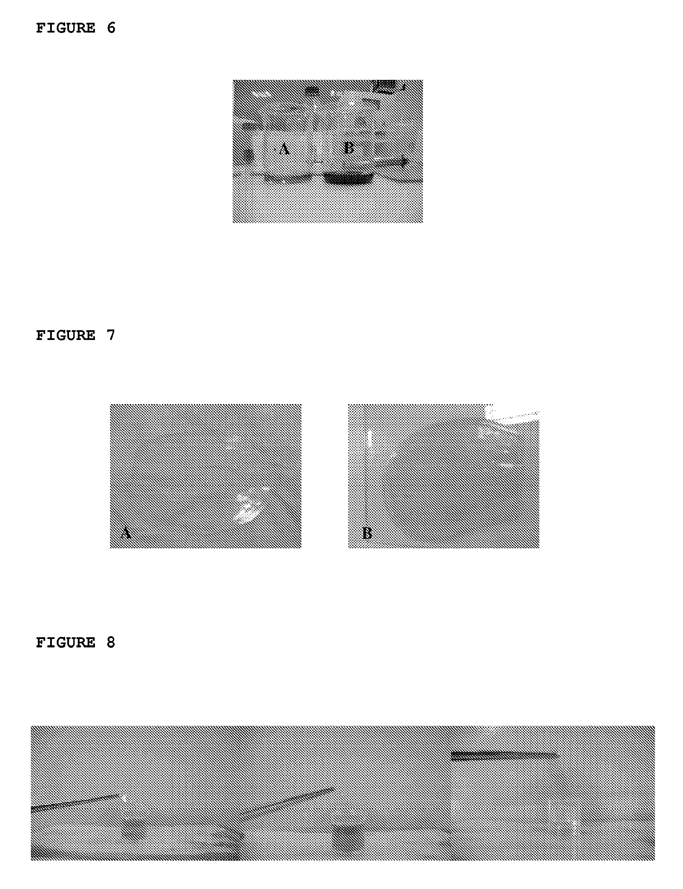

B.2 Synthetic receptor-containing hydrogels can also be prepared prior to the radical polymerisation of the monomer mixtures. Copolymers noncovalently incorporated into different hydrogels composed of a variety of compositions of hydroxyethyl methacrylate (HEMA), 2-methacrylic acid (MAA), methyl methacrylate (MMA) and 2-(diethylamino)ethyl methacrylate (DEAEMA), the structures of which are shown in Figure 2, were prepared by free radical polymerisation in the presence of cross-linkers. For instance, blank hydrogel matrixes of 10g total polymer mass can be prepared using methyl methacrylate (MMA) and 2-hydroxyethyl methacrylate (HEMA) in different ratios, such as: 9:1 (HEMA:MMA, w/w) and 100% HEMA monomer mixture containing dissolved synthetic receptors at various concentrations (10⁻³ - 10⁻⁶ M/L), for example SR2 at concentrations of 10⁻²M and 10⁻³M was immobilised in poly(HEMA) hydrogel (Figure 7). For the preparation of all receptor-incorporated hydrogels, sensor containing solution of monomers were stirred with a cross-linker ethylene glycol dimethacrylate (EGDMA) (1% w/w) and benzoyl peroxide (BPO) (0.4% w/w) as a radical initiator until dissolved. The monomer containing receptor mixture was injected into a mould, made using a spacer between two sides of silicone release liner held together between two glass plates and then heated at 90 °C for 2 h or at 60 °C for 12 h. This procedure generated flat sheets whose thickness ranged between 0.1mm and 1mm, whereby the plate spacing controlled the thickness. On removal from the moulds, the films were immersed in deionised water for 14 days to remove any unreacted monomer before use.

The immoblisation of SR2 was verified by allowing the hydrogel segments to soak for one month in Millipore water and according to UV/Vis and fluorescence spectroscopy, the water was found to contain no traces of any leached sensor.

The successful incorporation of SR2 into poly(HEMA) hydrogel was confirmed using UV/Vis and fluorescence spectroscopy whereby the sensor in the hydrogel exhibited an absorption band at 350 nm and an emission band at 520 nm.

### C. Use of Sensor Element

SR2 was immobilised onto the hydrogel by immersing a dehydrated strip of blank poly(HEMA) hydrogel in a solution of SR2 in EtOH (10⁻³ M) for one hour. The strip was subsequently dehydrated at 90 °C and then a concentrated solution of acetate was added dropwise onto the hydrogel containing EBVA61 and a distinct yellow-to-purple colour change occurred, which was evident to the naked-eye.

The invention is not limited to the embodiment hereinbefore described which may be varied in construction and detail without departing from the spirit of the invention.

## Claims

1. A sensor element suitable for colorimetric detection of anions in a sample, the sensor element comprising a water insoluble polymeric hydrogel having a polymer network defining a water permeable microvoid network, and an anion recognition dye (receptor) incorporated into the polymeric hydrogel, wherein the anion recognition dye has a general formula (I), 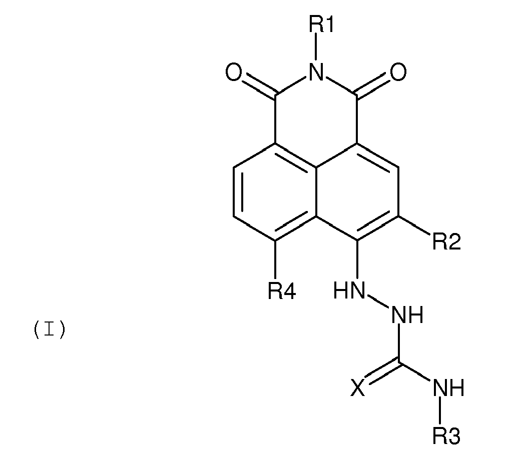 wherein:
- R1, R2, R3 and R4 are each, independently, selected from H or an optionally substituted group consisting of lower alkyl, allyl, aryl, thioureas, urea, amide, ether; and
- X is S or O.

2. A sensor element as claimed in Claim 1 in which R1 and R3 are each, independently, selected from H or an optionally substituted group consisting of lower alkyl, allyl, aryl, thioureas, urea, amide, ether, and R2 and R4 are H.

3. A sensor element as claimed in any preceding Claim in which X is S.

4. A sensor element as claimed in any preceding Claim in which the water insoluble polymeric hydrogel comprises an acrylate polymer.

5. A sensor element as claimed in Claim 4 in which the water insoluble polymeric hydrogel comprises a homo-polymer or a hetero-copolymer of an acrylate monomer selected form the group consisting of: hydroxyethyl methacrylate (HEMA); 2-methacrylic acid (MAA); methyl methacrylate (MMA); and 2-(diethylamino)ethyl methacrylate (DEAEMA).

6. A sensor element as claimed in any preceding Claim in which the anion recognition dye is entrapped within a water permeable microvoid network of the hydrogel.

7. A sensor element as claimed in any of Claims 1 to 5 in which the hydrogel is formed as a co-polymer of an acrylate monomer and an anion recognition dye of general formula (II) in which the R1 and R3 groups have been suitably functionalised to enable the recognition dye co-polymerise with the acrylate monomer.

8. A sensor element as claimed in Claim 7 in which the R1 and R3 groups are each, independently, allyl groups.

9. A sensor element as claimed in any preceding Claim and having an elongated form, such as, for example, a film, strip, tape, sheet or fibre.

10. An anion detection probe comprising a support having a sensor element of any of Claims 1 to 9 and provided in the form of a dip-stick.

11. A co-polymer of an acrylate monomer and a anion recognition dye of general formula (I), 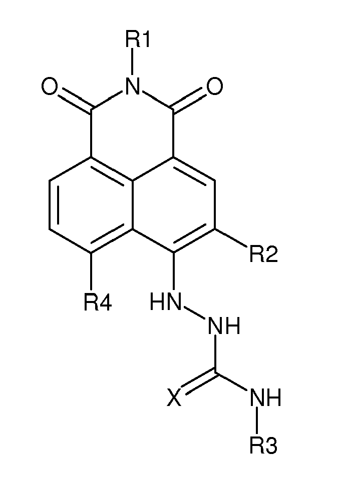 wherein:
- R1, R2, R3 and R4 are each, independently, selected from H or an optionally substituted group consisting of lower alkyl, allyl, aryl, thioureas, urea, amide, ether; and
X is S or O.

12. A method for assessing the anion status of a sample comprising a step of providing a sensor element according to any of Claims 1 to 9 that is capable of emitting a colorimetric signal in response to detection of anions, bringing the sensor element into contact with the sample for a suitable period of time, and then correlating the colorimetric signal with anion status.

13. A method as claimed in Claim 12 in which the sample is selected from the group consisting of: industrial water discharge; river water; seawater; effluent; soil; freshwater; and foodstuffs.

14. A method of producing a colormetric anion sensor element of the type comprising an anion recognition dye incorporated into a water insoluble polymeric hydrogel, wherein the anion recognition dye has a general formula
(I), 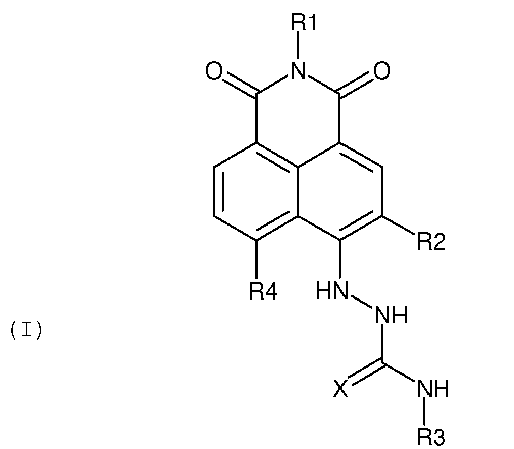 wherein:
- R1, R2, R3 and R4 are each, independently, selected from H or an optionally substituted group consisting of lower alkyl, allyl, aryl, thioureas, urea, amide, ether; and
X is S or O.
the method comprising the step providing a dehydrated water soluble polymeric hydrogel, immersing the dehydrated hydrogel into a solution of the anion recognition dye for a period of time sufficient to allow the dye molecules migrate into the microvoid network of the dehydrated hydrogel, and then dehydrating the hydrogel to entrap the dye molecules in the microvoid network.

15. A method as claimed in Claim 14 in which the solution of anion recognition dye has a concentration of 10⁻² to 10⁻⁶ M/L.
